# EUROPÄISCHE PATENTANMELDUNG

(11) **EP 1 612 592 A1**
(43) Veröffentlichungstag der Anmeldung: **04.01.2006**
(21) Anmeldenummer: 04015531.9
(22) Anmeldetag: 01.07.2004
(51) Int. Cl.: G02C 1/08

(54) **Brillengestell**

(71) Anmelder: Pachleitner, Michael, Dr., 8042 Graz (AT)
(72) Erfinder: Pachleitner, Michael, Dr., 8042 Graz (AT)
(74) Vertreter: Kirschner, Klaus Dieter

(57) **Zusammenfassung**

Die Erfindung betrifft ein Brillengestell (01, 13, 16) zur Anordnung zweier Gläser (02) einer Brille im Gesichtsfeld eines Benutzers, wobei am Brillengestell (01, 13, 16) zwei Fassungen (03) vorgesehen sind, die die Gläser (02) unter Aufbringung von Klemmkräften im Brillengestell fixierend umgreifen, und wobei an jeder Fassung (03) eine Schließeinrichtung vorgesehen ist, mit der zwei einander gegenüberliegende Enden (08, 09) der Fassungen (03) miteinander verbunden werden. Die Schließeinrichtung weist ein Halteteil (12) auf, wobei das Halteteil (12) die beiden Enden der Fassung oder zwei mit den beiden Enden (08, 09) der Fassung starr verbundene Übertragungselemente (10, 11, 14, 15, 17, 18) form- und/oder kraftschlüssig umgreift.

## Beschreibung

Die Erfindung betrifft ein Brillengestell zur Anordnung zweier Gläser einer Brille im Gesichtsfeld eines Benutzers nach dem Oberbegriff des Anspruchs 1.

Zur Fixierung der Gläser einer Brille im Gesichtsfeld des Brillenbenutzers werden gattungsgemäße Brillengestelle eingesetzt. Die Gläser können dabei aus einem transparenten Material, beispielsweise mineralischem Material oder einem Polymerwerkstoff, hergestellt sein.

Bei den bekannten Brillengestellen sind zur Fixierung der Gläser Fassungen vorgesehen, die die Gläser zumindest abschnittsweise formschlüssig umgreifen und Klemmkräfte auf dem Rand der Gläser aufbringen können. Um die Gläser im Gestell montieren bzw. demontieren zu können, weisen die Fassungen an einer Stelle eine Unterbrechung auf, in der sich die Enden der gläserumgreifenden Fassung einander gegenüberliegen. Diese Unterbrechung der Fassung wird mittels einer Schließeinrichtung überbrückt, wobei die Schließeinrichtung die Fassung an den Gläsern fixiert.

Bei bekannten Brillengestellen wird diese Schließeinrichtung beispielsweise von einem sogenannten Schließblock gebildet, dessen beide Teile an den einander gegenüberliegenden Enden der Fassung angelötet sind. Mittels einer Klemmschraube werden die beiden Teile des Schließblocks miteinander verbunden, so dass durch Anziehen der Klemmschraube die Fassung an den Gläsern fixiert wird.

Nachteilig an den bekannten Schließeinrichtungen für Brillengestelle ist es, dass diese nur mittels geeignetem Spezialwerkzeug betätigt werden können. Bei Brillengestellen mit Klemmschraube in einem Schließblock ist beispielsweise ein geeigneter Schraubendreher mit sehr geringer Schlitzbreite erforderlich.

Ausgehend von diesem Stand der Technik ist es deshalb Aufgabe der vorliegenden Erfindung, ein neues Brillengestell vorzuschlagen, das die Nachteile des bekannten Stands der Technik vermeidet.

Diese Aufgabe wird durch ein Brillengestell nach der Lehre des Anspruchs 1 gelöst.

Vorteilhafte Ausführungsformen der Erfindung sind Gegenstand der Unteransprüche.

Die Erfindung beruht auf dem Grundgedanken, dass zur Aufbringung der erforderlichen Klemmkräfte an den Gläsern ein Halteteil Verwendung findet, das die beiden Enden der Fassung oder zwei mit den beiden Enden der Fassung starr verbundene Übertragungselemente form- und/oder kraftschlüssig umgreift. Dabei ist es insbesondere von Vorteil, wenn das Halteteil mittels einer Schnappverbindung an den Enden der Fassung oder an den Übertragungselementen fixierbar ist. Im Ergebnis kann dadurch insbesondere erreicht werden, dass das Halteteil ohne Spezialwerkzeug montiert bzw. demontiert werden kann.

Um einen zuverlässigen Sitz des Halteteils am Gestell zu gewährleisten, kann das Halteteil eine Hinterschneidung aufweisen, die die Enden der Fassung bzw. die Übertragungselemente formschlüssig umgreift. Ein ungewolltes Lösen des Halteteils vom Brillengestell ist durch die Hinterschneidung bei normaler Belastung im Wesentlichen ausgeschlossen.

Aus welchem Werkstoff das Halteteil hergestellt ist, ist grundsätzlich beliebig. Besonders kostengünstig kann das Halteteil aus Kunststoff hergestellt werden. Insbesondere Hochleistungsthermoplaste mit hoher Wechselbiegefestigkeit sind hervorragend geeignet, um das Halteteil für erfindungsgemäße Brillengestelle zu bilden. Das Halteteil kann auch aus Metall oder Metallegierungen bestehen.

Nach einer Variante der Erfindung sind an den gegenüberliegenden Enden der Fassungen Übertragungselemente vorgesehen, mit denen die an der Schließeinrichtung aufgebrachte Klemmkraft auf die die Gläser umgreifenden Teile der Fassung, beispielsweise einen Metalldraht, übertragen werden. Um eine zuverlässige Befestigung der Übertragungselemente an den Enden der Fassung zu gewährleisten, ist es besonders vorteilhaft, wenn die Enden der Fassung stoffschlüssig mit den Übertragungselementen verbunden sind. Bei Einsatz von metallischen Fassungen und metallischen Übertragungselementen kann dies beispielsweise durch eine Löt- oder Schweißverbindung realisiert werden. Alternativ dazu ist es auch denkbar, dass die Enden der Fassung und die Übertragungselemente einstückig miteinander verbunden sind.

Für die konstruktive Gestaltung der Verbindung der Übertragungselemente an die Fassung gibt es verschiedene Alternativen. Nach einer ersten Ausführungsform werden die zur Fassung weisenden Enden der Übertragungselemente mit ihrer Stirnfläche stumpf an den Enden der Fassung befestigt, was zu einer im Ergebnis außerordentlich kompakten Gestaltung führt.

Alternativ dazu können die Übertragungselemente auch abschnittsweise parallel zur Fassung verlaufen, so dass die zu übertragenden Kräfte großflächig verteilt werden. Nach einer weiteren Ausführungsform ist vorgesehen, dass die Übertragungselemente von umgeformten Fortsätzen an den Enden der Fassung gebildet werden.

Aus welchem Material die Übertragungselemente hergestellt sind, ist grundsätzlich beliebig. Eine besonders hohe Festigkeit bieten Übertragungselemente aus Metall. Aus diesem Grund sind Übertragungselemente, die aus Abschnitten eines Metalldrahtes oder Metallprofils hergestellt sind, besonders gut geeignet.

Die Übertragungselemente können einen beliebigen Querschnitt haben. Es ist jedoch vorteilhaft, wenn die Übertragungselemente einen kreisrunden Querschnitt aufweisen, da die damit gebildete runde Außenkontur der Übertragungselemente formschlüssig vom Halteelement übergriffen werden kann. Dabei bildet sich ohne Weiteres eine Hinterschneidung, und die vorzugsweise zu realisierende Schnappverbindung ist einfach herstellbar.

Zur Erreichung einer erhöhten Funktionsintegration ist es besonders vorteilhaft, wenn die Übertragungselemente zum Schließen der Fassungen zugleich auch Teil der Ohrenbügel sind. Dies bedeutet mit anderen Worten, dass die Haltekräfte der Ohrenbügel über die Übertragungselemente auf die Fassung übertragen werden. Diese Funktionsintegration lässt sich besonders einfach dadurch realisieren, dass der feststehende Teil des Ohrenbügels zwischen einem Gelenk zum Einklappen des freien Endes des Ohrenbügels einerseits und der Fassung andererseits angeordnet ist.

Das erfindungsgemäße Gestell ist im Grundsatz zur Herstellung beliebiger Brillentypen geeignet. Insbesondere können Korrektionsbrillen, Sonnenbrillen, Lesebrillen oder Sportbrillen mit derartigen Gestellen hergestellt werden.

Nachfolgend werden verschiedene Ausführungsformen des Brillengestells an Hand der Zeichnungen beispielhaft erläutert.

Es zeigen:
- **Fig. 1**: ein Brillengestell in Ansicht von vorne;
- **Fig. 2**: das Brillengestell gemäß **Fig. 1** in seitlicher Ansicht;
- **Fig. 3**: das Brillengestell gemäß **Fig. 1** in Ansicht von oben;
- **Fig. 4**: das Brillengestell gemäß **Fig. 1** im Querschnitt entlang der Schnittlinie A-A;
- **Fig. 5**: das Brillengestell gemäß **Fig. 2** in der Einzelheit X;
- **Fig. 6**: das Brillengestell gemäß **Fig. 5** in perspektivischer Ansicht;
- **Fig. 7**: das Brillengestell gemäß **Fig. 6** mit abgenommenem Halteteil;
- **Fig. 8**: das Brillengestell gemäß **Fig. 7** mit montiertem Halteteil;
- **Fig. 9**: das Brillengestell gemäß **Fig. 8** in perspektivischer Ansicht von hinten;
- **Fig. 10**: eine zweite Ausführungsform eines Brillengestells im Querschnitt entlang der Schnittlinie A-A;
- **Fig. 11**: das Brillengestell gemäß **Fig. 10** in der Einzelheit X;
- **Fig. 12**: das Brillengestell gemäß **Fig. 11** in perspektivischer Ansicht;
- **Fig. 13**: das Brillengestell gemäß **Fig. 12** mit abgenommenem Halteteil;
- **Fig. 14**: das Brillengestell gemäß **Fig. 13** mit montiertem Halteteil;
- **Fig. 15**: das Brillengestell gemäß **Fig. 14** in perspektivischer Ansicht von hinten;
- **Fig. 16**: eine dritte Ausführungsform eines Brillengestells im Querschnitt entlang der Schnittlinie A-A;
- **Fig. 17**: das Brillengestell gemäß **Fig. 16** in der Einzelheit X;
- **Fig. 18**: das Brillengestell gemäß **Fig. 17** in perspektivischer Ansicht;
- **Fig. 19**: das Brillengestell gemäß **Fig. 18** mit abgenommenem Halteteil;
- **Fig. 20**: das Brillengestell gemäß **Fig. 19** mit montiertem Halteteil;
- **Fig. 21**: das Brillengestell gemäß **Fig. 20** in perspektivischer Ansicht von hinten.

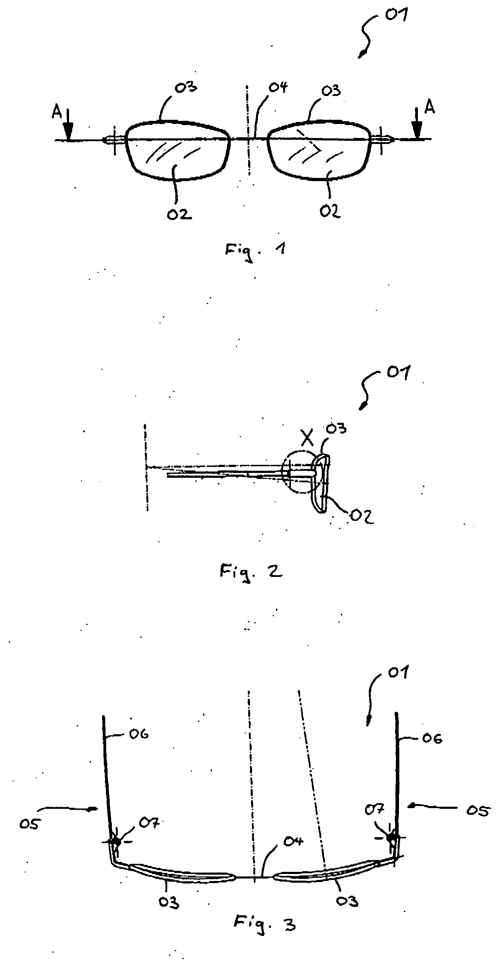

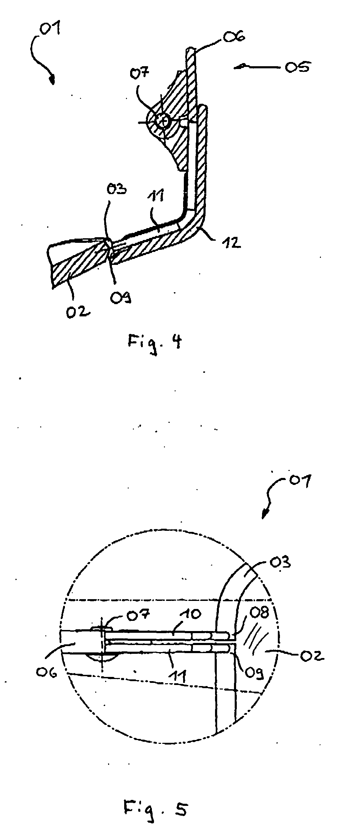

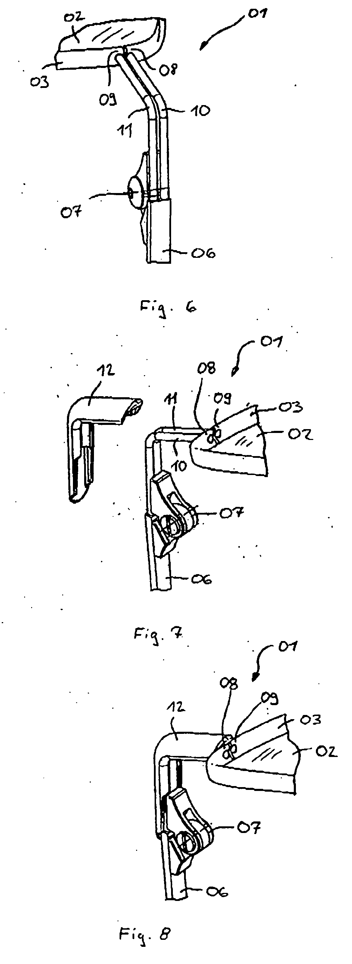

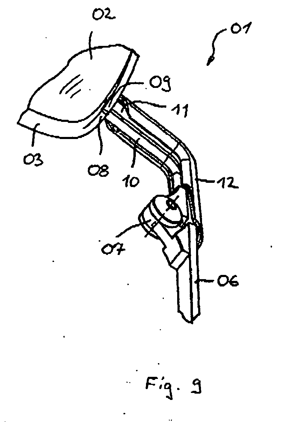

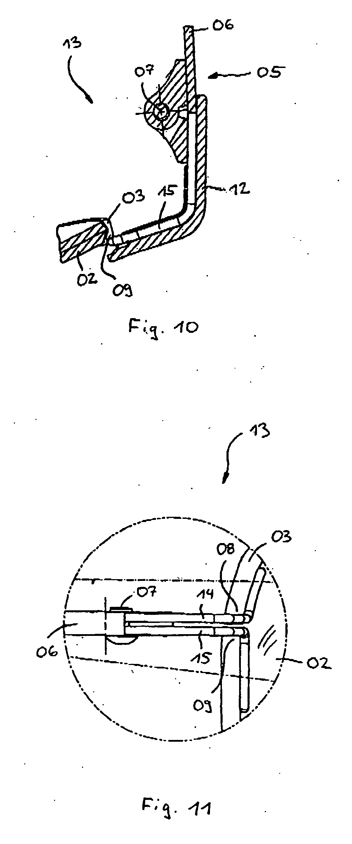

Das in **Fig. 1 bis Fig. 3** dargestellte Brillengestell 01 dient zur Anordnung zweier Gläser 02 im Gesichtsfeld eines Brillenbenutzers. Der Begriff Gläser ist dabei nicht als Werkstoffangabe zu verstehen, sondern bezeichnet den Teil der Brille, der unmittelbar vor den Augen angeordnet wird. Die Gläser 02 können beispielsweise aus mineralischem Glas oder auch aus geeignetem transparenten Kunststoff hergestellt sein. Zur Fixierung der Gläser 02 im Brillengestell 01 dienen zwei Fassungen 03, die die Gläser 02 bei der dargestellten Ausführungsform allseitig formschlüssig umgreifen. Die beiden Fassungen 03 werden mittig von einem Nasenbügel 04 verbunden. Zur Übertragung der Haltekräfte auf den Kopf des Benutzers sind zusätzliche Ohrenbügel 05 vorgesehen, deren freies Ende 06 mittels eines Gelenks 07 eingeklappt werden kann.

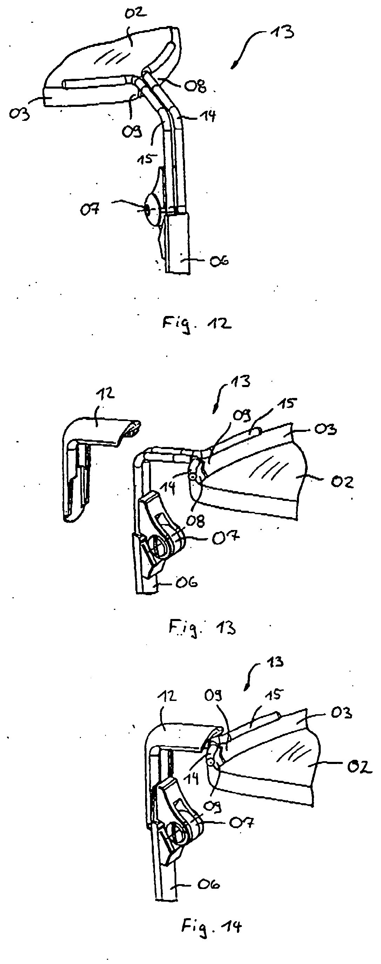

Wie aus **Fig. 4 und Fig. 5** ersichtlich, umgreift ein die Fassung 03 bildender Profildraht die Gläser 02, wodurch auf der Innenseite der Fassung 03 die zur Fixierung der Gläser 02 notwendige Klemmkraft auf den Rand der Gläser 02 aufgebracht wird.

An der Außenseite der Fassung 03 weist das Drahtprofil eine Unterbrechung auf, so dass an der Fassung 03 zwei einander gegenüberliegende Enden 08 und 09 gebildet sind. An den Enden 08 und 09 sind jeweils starr zwei Übertragungselemente 10 und 11 befestigt.

Bei der dargestellten Ausführungsform sind dazu die aus Metalldrähten hergestellten Übertragungselemente 10 und 11 mit einem Ende rechtwinkelig abstehend an den Enden 08 und 09 der Fassung 03 angelötet. Der von der Fassung 03 wegweisende Teil des Übertragungselements 11 ist zudem mittels einer Lötverbindung am Gelenk 07 befestigt. Der von der Fassung 03 wegweisende Teil des Übertragungselements 10 ist dagegen nicht mit dem Gelenk 07 verbunden, sondern bildet ein freies Ende, an dem die Fassung 03 aufgespreizt werden kann.

Die Art der Montage der Gläser 02 in den Fassungen 03 soll nachfolgend an Hand der Zeichnungen **Fig. 6 bis Fig. 8** erläutert werden. Wie aus **Fig. 6** ersichtlich, werden zur Vormontage der Gläser 02 in den Fassungen 03 die beiden Übertragungselemente 10 und 11 ein Stück weit auseinander gespreizt, bis das Glas 02 am Innenumfang der Fassung 03 eingelegt werden kann. Anschließend federt die Fassung 03 elastisch zurück und fixiert das Glas 02 zunächst provisorisch.

Zur Aufbringung der im Normalgebrauch erforderlichen Klemmkräfte von der Fassung 03 auf den Rand der Gläser 02 sind Halteteile 12 vorgesehen, die aus einem thermoplastischen Hochleistungswerkstoff, aus Metall, insbesondere Titan, Silber und Gold, oder Metallegierungen wie Titanlegierungen hergestellt sein können. Die Halteteile 12 werden von außen auf die beiden Übertragungselemente 10 und 11 aufgedrückt, wobei sich auf Grund der Elastizität des Halteteils 12 bzw. der Übertragungselemente 10 und 11 eine Schnappverbindung ausbildet, in der die Übertragungselemente 10 und 11 formschlüssig von der hinterschnittenen Befestigungskontur auf der Innenseite des Halteteils 12 umgriffen werden. Auf diese Weise werden die beiden Enden 08 und 09 der Fassung 03 gegeneinander gedrückt und dadurch die erforderliche Klemmkraft von der Fassung 03 auf den Rand des Glases 02 aufgebracht.

In **Fig. 9** ist die Schnappverbindung des Halteteils 12, die die Übertragungselemente 10 und 11 formschlüssig umgreift, in Perspektive von hinten dargestellt. Der mit der Fassung 03 starr verbundene Teil des Ohrenbügels 05 wird vom Übertragungselement 11 gebildet, das einerseits mit der Fassung 03 und anderseits mit dem Gelenk 07 starr verbunden ist. Die Außenseite des Halteteils 12 ist in der Art einer geschlossenen Blende ausgebildet, so dass die beiden die Übertragungselemente 10 und 11 bildenden Metalldrähte von außen überdeckt sind und nicht gesehen werden. Die Montage bzw. Demontage des Halteteils 12 kann werkzeuglos erfolgen.

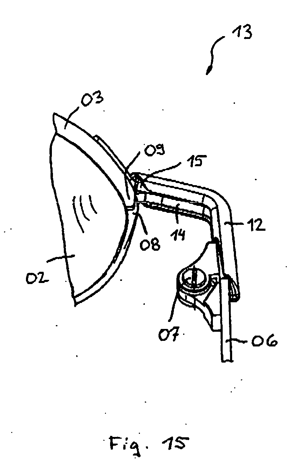

In **Fig. 10 bis Fig. 15** ist eine zweite Ausführungsform 13 eines Brillengestells dargestellt. Der Aufbau des Brillengestells 13 entspricht im Wesentlichen dem Aufbau des Brillengestells 01 und unterscheidet sich durch die Gestaltung der Übertragungselemente 14 und 15. Beim Brillengestell 13 verlaufen die zur Fassung 03 weisenden Enden der Übertragungselemente 14 und 15 ein Stück weit parallel zur Fassung 03, und sind entlang dieses koaxialen Verlaufs von außen auf die Fassung 03 aufgelötet. Die Befestigung der Gläser 02 im Brillengestell 13 durch Anbringung des Halteteils 12 entspricht der Art der Befestigung am Brillengestell 01.

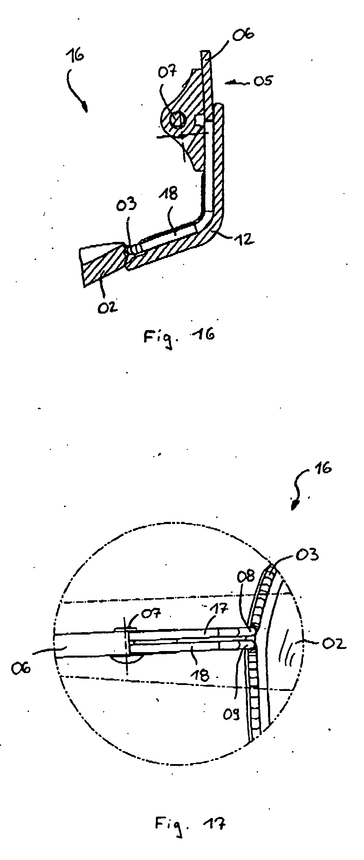

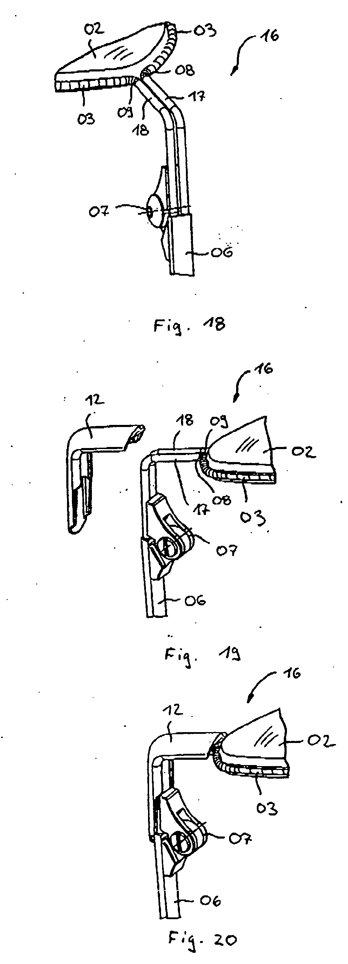

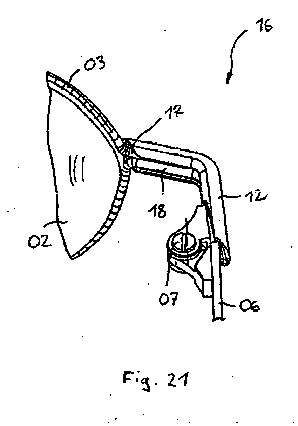

In **Fig. 16 bis Fig. 21** ist eine dritte Ausführungsform 16 eines erfindungsgemäßen Brillengestells dargestellt. Der Aufbau des Brillengestells 16 stimmt wiederum im Wesentlichen mit dem Aufbau des Brillengestells 01 überein, wobei beim Brillengestell 16 die Übertragungselemente 17 und 18 einstückig mit dem die Fassungen 03 bildenden Metalldraht verbunden sind. Dies bedeutet mit anderen Worten, dass die Übertragungselemente 17 und 18 durch Umformung des die Fassung 03 bildenden Metalldrahts gebildet werden. Die beiden Übertragungselemente 17 und 18 werden durch Anbringung des Halteteils 12 gegeneinander verspannt.

## Patentansprüche

1. Brillengestell (01, 13, 16) zur Anordnung zweier Gläser (02) einer Brille im Gesichtsfeld eines Benutzers, wobei am Brillengestell (01, 13, 16) zwei Fassungen (03) vorgesehen sind, die die Gläser (02) unter Aufbringung von Klemmkräften im Brillengestell fixierend umgreifen, und wobei an jeder Fassung (03) eine Schließeinrichtung vorgesehen ist, mit der zwei einander gegenüberliegende Enden (08, 09) der Fassungen (03) miteinander verbunden werden,
**dadurch gekennzeichnet,**
**dass** die Schließeinrichtung ein Halteteil (12) aufweist, wobei das Halteteil (12) die beiden Enden der Fassung oder zwei mit den beiden Enden (08, 09) der Fassung starr verbundene Übertragungselemente (10, 11, 14, 15, 17, 18) form- und/oder kraftschlüssig umgreift.

2. Brillengestell nach Anspruch 1,
**dadurch gekennzeichnet,**
**dass** das Halteteil (12) mittels einer Schnappverbindung an den Enden der Fassung oder an den Übertragungselementen (10, 11, 14, 15, 17, 18) fixierbar ist.

3. Brillengestell nach Anspruch 1 oder 2,
**dadurch gekennzeichnet,**
**dass** das Halteteil (12) zumindest eine Hinterschneidung aufweist, wobei die Enden der Fassung und/oder die Übertragungselemente (10, 11, 14, 15, 17, 18) formschlüssig von der Hinterschneidung umgriffen werden.

4. Brillengestell nach einem der Ansprüche 1 bis 3,
**dadurch gekennzeichnet,**
**dass** die Übertragungselemente (10, 11, 14, 15) stoffschlüssig mit den Enden (08, 09) der Fassung (03) verbunden, insbesondere angelötet oder angeschweißt, sind.

5. Brillengestell nach einem der Ansprüche 1 bis 4,
**dadurch gekennzeichnet,**
**dass** die zur Fassung (03) weisenden Enden der Übertragungselemente (10, 11) mit stumpf an den Enden (08, 09) der Fassung befestigt sind.

6. Brillengestell nach einem der Ansprüche 1 bis 4,
**dadurch gekennzeichnet,**
**dass** die zur Fassung (03) weisenden Enden der Übertragungselemente (14, 15) abschnittsweise parallel zur Fassung (03) verlaufend an den Enden (08, 09) der Fassung (03) befestigt sind.

7. Brillengestell nach einem der Ansprüche 1 bis 4,
**dadurch gekennzeichnet,**
**dass** die Übertragungselemente (17, 18) von umgeformten Fortsätzen an den Enden (8, 09) der Fassung (03) gebildet werden.

8. Brillengestell nach einem der Ansprüche 1 bis 7,
**dadurch gekennzeichnet,**
**dass** sich die paarweise angeordneten Übertragungselemente (10, 11, 14, 15, 17, 18) abschnittsweise linear entlang parallel zueinander verlaufender Längsachsen erstrecken.

9. Brillengestell nach einem der Ansprüche 1 bis 8,
**dadurch gekennzeichnet,**
**dass** die Übertragungselemente (10, 11, 14, 15, 17, 18) im wesentlichen rechtwinkelig umgeformt sind und von einem im wesentlichen rechtwinkelig ausgebildeten Halteteil (12) umgriffen werden.

10. Brillengestell nach einem der Ansprüche 1 bis 9,
**dadurch gekennzeichnet,**
**dass** am Brillengestell (01, 13, 16) zwei Ohrenbügel (05) zur Fixierung der Brille im Gesichtsfeld des Benutzers vorgesehen sind, wobei die Übertragungselemente (10, 11, 14, 15, 17, 18) Teil der Ohrbügel sind.

11. Brillengestell nach Anspruch 10,
**dadurch gekennzeichnet,**
**dass** am Ohrenbügel (05) ein Gelenk (07) zum Einklappen des freien Endes (06) des Ohrenbügels (05) vorgesehen ist, wobei der feststehende Teil des Ohrenbügel (05) zwischen Gelenk (07) und Fassung (03) von den Übertragungselementen (10, 11, 14, 15, 17, 18) gebildet wird.
